# EUROPEAN PATENT APPLICATION

(11) **EP 4 792 892 A1**
(43) Date of publication of application: **19.08.2026**
(21) Application number: 24878611.3
(22) Date of filing: 30.07.2024
(51) Int. Cl.: A62C 3/16, B60L 53/30, B60L 53/80, A62C 31/00, A62C 31/28, F26B 21/00, F26B 5/16

(54) **CHARGING RACK, BATTERY, ELECTRIC DEVICE AND BATTERY SWAPPING SYSTEM**

(30) Priority: 18.10.2023 CN 202322799033 U
(71) Applicant: Contemporary Amperex Technology Co., Limited, Ningde, Fujian 352100 (CN)
(72) Inventor: LI, Yan, Ningde, Fujian 352100 (CN); LV, Juanxia, Ningde, Fujian 352100 (CN); HE, Jia, Ningde, Fujian 352100 (CN); LI, Jia, Ningde, Fujian 352100 (CN)
(74) Representative: Ziebig Hengelhaupt Intellectual Property Attorneys Patentanwaltskanzlei PartGmbB
(86) International application number: PCT/CN2024/108611
(87) International publication number: WO 2025/081959

(57) **Abstract**

A charging rack (100), a battery (200), an electric device and a battery swapping system (300). The charging rack (100) comprises: a rack (10), comprising a plurality of storage chambers (11); a pipeline assembly (20) arranged on the rack (10), wherein the pipeline assembly (20) can extend into each storage chamber (11) and is in communication with the storage chamber (11); and a feeding device (30), which is in communication with the pipeline assembly (20), wherein the feeding device (30) is used for conveying a desiccant to the pipeline assembly (20), and the feeding device (30) is further used for conveying a fire extinguishing agent to the pipeline assembly (20). The battery (200) is applied to the charging rack (100). The electric device comprises the battery (200). The battery swapping system (300) comprises the charging rack (100).

## Description

The present application claims priority to Chinese Patent Application No. 202322799033.4, entitled "CHARGING RACK, BATTERY, ELECTRICAL APPARATUS, AND BATTERY SWAPPING SYSTEM", filed to the China National Intellectual Property Administration on October 18, 2023, the entire content of which is incorporated herein by reference.

### TECHNICAL FIELD

The present application belongs to the technical field of vehicle charging, and particularly relates to a charging rack, a battery, an electrical apparatus, and a battery swapping system.

### BACKGROUND

With the development of electric vehicles, the main measures to extend the driving range at present include two technological means of fast charging and battery swapping. The scheme of a battery swapping type power battery system requires the establishment of battery swapping stations. The battery swapping stations store a large number of fully charged batteries or batteries which are being charged. If a certain battery experiences thermal runaway and catches fire, the high temperature and fire will spread rapidly throughout the space, causing casualties and property damage. Furthermore, if the humidity inside the battery is high, condensation, water accumulation and the like may occur due to the combined effect of temperature and humidity, which will deteriorate the battery charging environment and affect the safety performance of the battery.

### SUMMARY OF THE INVENTION

In view of the above problem, the present application provides a charging rack, a battery, an electrical apparatus, and a battery swapping system, so that the problem of potential safety hazards of a single battery during charging and storage can be alleviated.

In a first aspect, an embodiment of the present application provides a charging rack, configured to charge a battery. The charging rack includes:
a support, where the support includes a plurality of storage chambers;
a pipeline assembly, where the pipeline assembly extends into at least a part of the storage chambers and is in communication with the storage chambers; and
a feeding apparatus, being in communication with the pipeline assembly, where the feeding apparatus is configured to deliver a drying agent and/or a fire extinguishing agent to the pipeline assembly.

In the technical solution of this embodiment, the feeding apparatus capable of delivering the drying agent and/or the fire extinguishing agent to the pipeline assembly is arranged, enabling the charging rack to have both the capability of battery drying and the capability of fire extinguishing. One end of the pipeline assembly extends into each storage chamber, allowing an execution assembly to deliver the drying agent or the fire extinguishing agent into each storage chamber. This enables a targeted drying or fire extinguishing operation on a single battery, thereby reducing the impact on other batteries in the charging rack and improving the efficiency of drying or fire extinguishing.

In some embodiments, the charging rack also includes a socket arranged in the storage chamber, and the socket can be connected to the battery by insertion; and
an end of the pipeline assembly extending into the storage chamber is connected to a socket in the corresponding storage chamber.

In the technical solution of this embodiment, one end of the pipeline assembly is arranged on the socket in the storage chamber. When the socket is connected to the battery by insertion, the drying agent or the fire extinguishing agent can be directly introduced into the battery, thereby enabling the drying agent or the fire extinguishing agent to directly act on the battery for drying or fire extinguishing, reducing the escape of the drying agent or the fire extinguishing agent, and improving the efficiency of drying or fire extinguishing.

In some embodiments, the pipeline assembly includes a pipe member mounted on the support; and/or the pipeline assembly includes a channel formed in the support.

In the technical solution of this embodiment, the pipeline assembly includes the pipe member mounted on the support and/or the channel formed in the support. It is easy to arrange the pipe member mounted on the support, while the channel formed in the support occupy less space and is not prone to damage. The specific structure of the pipeline assembly can be determined according to the working environment to reduce costs and the occupied space, thereby improving the safety performance and service life.

In some embodiments, the pipeline assembly includes a main pipeline arranged on the support and a plurality of branch pipelines connected to the main pipeline; the main pipeline is in communication with the feeding apparatus; and one end of the branch pipeline is in communication with the main pipeline, and the other end extends into the storage chamber.

In the technical solution of this embodiment, the pipeline assembly includes the main pipeline and the plurality of branch pipelines. The feeding apparatus can deliver the drying agent or the fire extinguishing agent to each branch pipeline through the main pipeline without having to arrange a separate pipeline for each storage chamber. This simplifies the pipeline assembly, reduces the space occupied by the pipeline assembly, and also facilitates the feeding apparatus to deliver the drying agent or the fire extinguishing agent.

In some embodiments, the main pipeline is arranged on the support; and/or the feeding apparatus is arranged on the support.

In the technical solution of this embodiment, the main pipeline and/or the feeding apparatus are/is arranged on the support, which can reduce the difficulty for arranging the charging rack and reduce the space occupied by the feeding apparatus and the main pipeline at the same time.

In some embodiments, the pipeline assembly further includes a terminal pipeline connected to the branch pipeline, and an end of the terminal pipeline deviating from the branch pipeline is connected to the socket.

In the technical solution of this embodiment, the terminal pipeline directly connected to the socket is arranged, so that the drying agent or the fire extinguishing agent can be directly input into the battery after the socket is connected to the battery by insertion, which facilitates an efficient drying or fire extinguishing operation on the battery.

In some embodiments, the socket is movably connected into the storage chamber, and the socket can move in a direction close to or far away from the battery.

Because the battery is heavy and inconvenient to move, while the socket is lightweight, in the technical solution of this embodiment, the socket is set as a movable structure, so that the socket can move in the direction close to the battery to connect the socket to the battery by insertion, thereby reducing secondary movement of the battery in the storage chamber and reducing the insertion difficulty.

In some embodiments, a lifting assembly is arranged in the storage chamber, and the socket is arranged on the lifting assembly.

In the technical solution of this embodiment, the lifting assembly is arranged in the storage chamber, and the socket is driven by the lifting assembly to move, so that the socket is movable and the socket is enabled to move closer to or further away from the battery.

In some embodiments, the socket is provided with a delivery channel for delivering the drying agent or the fire extinguishing agent, and the delivery channel is in communication with the pipeline assembly.

In the technical solution of this embodiment, the delivery channel being in communication with the pipeline assembly is arranged on the socket, so that the pipeline assembly can directly introduce the drying agent or the fire extinguishing agent into the battery through the delivery channel, thereby achieving the efficient drying or fire extinguishing operation on the battery.

In some embodiments, the socket is provided with a high-voltage connector and a low-voltage connector, and the high-voltage connector, the low-voltage connector, and the delivery channel are arranged on a same side of the socket.

In the technical solution of this embodiment, the high-voltage connector, the low-voltage connector, and the delivery channel are all integrated in the socket, which enables the socket to simultaneously have charging, discharging, drying, and fire extinguishing functions, thereby increasing the functions of the socket and simplifying the structure of the charging rack at the same time.

In some embodiments, the socket includes a housing and a guide member arranged in the housing, and the guide member is configured to guide a plug on the battery to be inserted into the socket.

In the technical solution of this embodiment, the guide member is arranged on the socket to facilitate connecting the socket to the battery by insertion, thereby enabling the socket to be connected to the battery by insertion more accurately.

In some embodiments, the guide member is in a flared shape, and a larger inner diameter end faces outward.

The technical solution of this embodiment provides a specific structure for the guide member. As the socket moves in the direction close to the battery, the guide member in the flared shape can correct a movement direction of the socket, so that the socket can be connected to the battery by insertion more accurately.

In some embodiments, the guide member is movably arranged in the housing.

To reduce secondary movement of the battery in the storage chamber, in the technical solution of this embodiment, the guide member is set as a movable floating structure to facilitate alignment between the guide member and the plug of the battery.

In some embodiments, the socket further includes a plurality of first elastic members; one end of the first elastic member is connected to the housing, and the other end is connected to the guide member; and a deformation direction of the first elastic member is perpendicular to the movement direction of the socket.

In the technical solution of this embodiment, the first elastic member is used to position the guide member. During the process of connecting the socket to the battery by insertion, if there is a positional offset between the socket and the plug of the battery, the guide member can be aligned with the plug under the action of the plug and deform the first elastic member. As the socket continues moving for insertion, the force for the first elastic member to reset can make the socket and the plug face each other, thereby finally completing insertion.

In some embodiments, the deformation directions of the plurality of first elastic members are on a same plane.

Since the deformation direction of the first elastic member is perpendicular to the movement direction of the socket, in the technical solution of this embodiment, the deformation directions of the plurality of first elastic members are made to be on the same plane, so that the forces applied by the first elastic members to the guide member are all in the same plane, so as to better correct and maintain the position of the guide member.

In some embodiments, the socket further includes a second elastic member; one end of the second elastic member is connected to the guide member, and the other end is connected to the housing; the second elastic member is configured to press the guide member against the housing; and a deformation direction of the second elastic member is perpendicular to the plane where the deformation direction of the first elastic member is located.

In the technical solution of this embodiment, the guide member is pressed against the housing by arranging the second elastic member to fix the position of the guide member, so that the guide member has a determined position when the socket is idle.

In some embodiments, the feeding apparatus includes a drying assembly and a fire extinguishing assembly, the drying assembly is in communication with the pipeline assembly, and the drying assembly is configured to input the drying agent to the pipeline assembly;

The fire extinguishing assembly is in communication with the pipeline assembly, and the fire extinguishing assembly is configured to input the fire extinguishing agent to the pipeline assembly.

In the technical solution of this embodiment, the feeding apparatus includes the drying assembly and the fire extinguishing assembly independent of each other, so as to facilitate introducing the drying agent or the fire extinguishing agent into the battery under different working conditions, and to facilitate independent control over the drying assembly and the fire extinguishing assembly.

In some embodiments, the drying agent and/or the fire extinguishing agent are/is a gas.

In the technical solution of this embodiment, setting the drying agent and/or the fire extinguishing agent as a gas can reduce the impact of the drying agent or the fire extinguishing agent on the internal structure of the battery. At the same time, the gaseous drying agent or fire extinguishing agent can also reduce the impact of the residual drying agent or fire extinguishing agent in the pipeline assembly on the next delivery. The gaseous drying agent and fire extinguishing agent also facilitate delivery by the feeding apparatus.

In a second aspect, an embodiment of present application further provides a battery, applied to the charging rack according to the embodiment of the first aspect. The battery includes a plug, and a through hole for delivering a drying agent or a fire extinguishing agent is formed in the plug.

In the technical solution of this embodiment, the through hole for delivering the drying agent or the fire extinguishing agent is formed in the plug of the battery, so that the drying agent or the fire extinguishing agent can enter the battery through the through hole, thereby achieving the effect of drying and dehumidifying or fire extinguishing and cooling on the battery more efficiently.

In a third aspect, an embodiment of the present application provides an electrical apparatus, including the battery according to the embodiment of the second aspect.

In a fourth aspect, an embodiment of the present application provides a battery swapping system, including the charging rack according to the embodiment of the first aspect.

The above illustrations are merely brief descriptions for the technical solutions of the present application. Specific embodiments of the present application are described specifically in the following to understand the technical solutions of the present application more clearly and implement the present application according to content of the specification, and to make the above and other objectives, features and advantages of the present application more comprehensible.

### BRIEF DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, in all of the drawings, the same components are indicated by the same reference numerals. In the drawings:
FIG. 1 is a schematic structural diagram of a charging rack according to an embodiment of the present application;
FIG. 2 is a bottom-view schematic diagram of a socket in the charging rack shown in FIG. 1;
FIG. 3 is a three-dimensional schematic diagram of the socket in the charging rack shown in FIG. 1;
FIG. 4 is a schematic diagram of an internal structure of the socket in the charging rack shown in FIG. 1;
FIG. 5 is a three-dimensional schematic diagram of the internal structure of the socket shown in FIG. 4;
FIG. 6 is a three-dimensional schematic diagram of a plug in a battery according to an embodiment of the present application; and
FIG. 7 is a schematic diagram of a battery swapping system according to an embodiment of the present application.

Meanings of the reference numerals in the drawings are as follows:
100. charging rack;
10. support; 11. storage chamber;
20. pipeline assembly; 21. main pipeline; 22. branch pipeline; 23. terminal pipeline;
30. feeding apparatus; 31. drying assembly; 32. fire extinguishing assembly;
40. socket; 41. delivery channel; 42. housing; 421. edge plate; 43. guide member; 44. first elastic member; 45. second elastic member; 46. low-voltage connector; 47. high-voltage connector;
200. battery;
50. plug; 51. feed hole;
300. battery swapping system;
60. transport module;
70. buffer module;
80. palletizing module.

### DETAILED DESCRIPTION

The embodiments of the technical solution of the present application will be described in detail below with reference to the accompanying drawings. The following embodiments are only used to illustrate the technical solutions of the present application more clearly, and thus are only interpreted as examples, rather than used to limit the scope of protection of the present application.

Unless otherwise defined, all technical and scientific terms used herein have the same meanings as those commonly understood by those skilled in the art of the present application. The terms used herein are intended only for the purpose of describing specific embodiments and are not intended to limit the present application. The terms "including" and "having" and any variations thereof in the specification and claims of the present application and in the description of the above accompanying drawings are intended to cover non-exclusive inclusion.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

The "embodiment" mentioned herein means that specific features, structures, or characteristics described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiment of the present application, the term "and/or" is merely an association relationship that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount," "connect," "connection," "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only used in energy storage power systems such as hydropower, thermal power, wind power and solar power stations, but also widely used in electric vehicles such as electric bicycles, electric motorcycles, and electric automobiles, as well as military equipment and aerospace and other fields. With the continuous expansion of the application field of power batteries, their market demand is also constantly increasing.

In the field of electric vehicles, the main measures to extend the driving range include two technological means of fast charging and battery swapping. The scheme of a battery swapping type power battery system requires the establishment of battery swapping stations. The battery swapping stations store a large number of fully charged batteries or batteries which are being charged. If a certain battery experiences thermal runaway, which will spread rapidly throughout the space, causing casualties and property damage. Furthermore, if the humidity inside the battery is high, condensation, water accumulation and the like may occur due to the combined effect of temperature and humidity, which will deteriorate the battery charging environment and affect the safety performance of the battery.

To reduce condensation, water accumulation and the like on batteries, the current common practice is to place a large amount of solid drying agent in charging racks, charging cabinets, or other charging spaces to reduce air humidity. However, this method results in significant drying agent consumption and requires frequent drying agent replacement, causing low efficiency.

To mitigate the risk that the battery experiences thermal runaway and catch fire, current solutions often involve arranging automatic fire extinguishing apparatuses in charging racks, charging cabinets, or other charging spaces. Due to this setting, when a certain battery catches fire, fire extinguishing treatment will be performed on the whole space. Although a fire extinguishing effect can be achieved, it will exert an adverse impact on other normal batteries. In addition, a single fire extinguishing process requires a relatively large amount of fire extinguishing agent and a large-scale fire extinguishing device, resulting in high space requirements and relatively high costs. Meanwhile, after the fire extinguishing apparatus is triggered, the entire space must be processed before it can be reused, which significantly reduces the charging efficiency.

Therefore, the present application provides a charging rack that can act on a single battery for drying and fire extinguishing, achieving the effect of precise drying and fire extinguishing, improving the drying efficiency while reducing the loss of the drying agent, improving the fire extinguishing effect while reducing the impact on other batteries, and also reducing the amount of the fire extinguishing agent required for a single fire extinguishing process.

The charging rack provided in the embodiment of the present application can be applied to battery swapping stations that store a large number of power batteries, as well as to dedicated battery swapping systems for large electrical devices, power battery charging cabinets for small electrical devices, or other battery swapping systems. The large electrical devices can be ships, airplanes, rockets, space shuttles, spacecraft, and other spacecraft, while the small electrical devices can be electric toys, electric tools, battery vehicles, electric-assisted vehicles, etc.

To illustrate the technical solutions according to the present application, the following description is provided in conjunction with specific drawings and embodiments, and taking "the electrical device being a vehicle and the power battery being a vehicle battery" as an example.

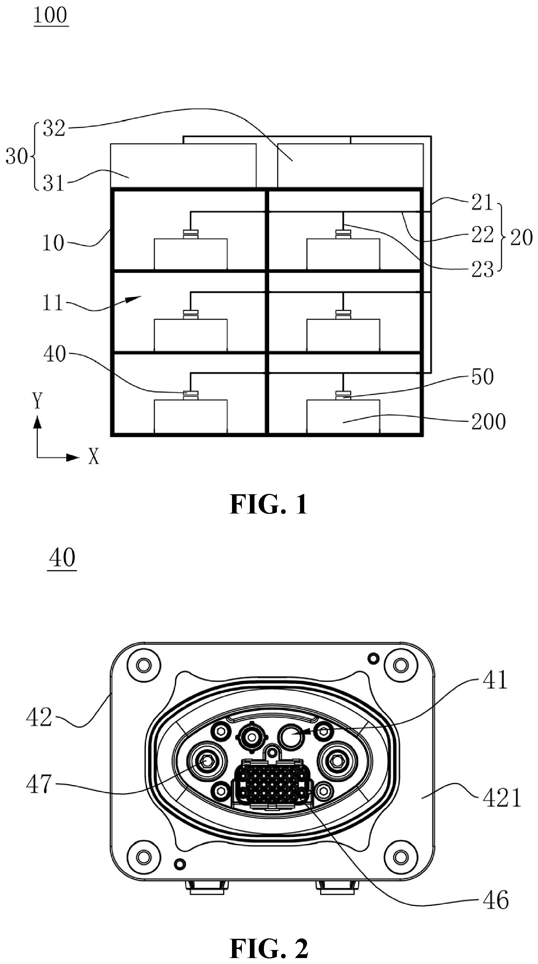

Referring to FIG. 1, in a first aspect, an embodiment of the present application provides a charging rack 100, configured to charge batteries 200. The charging rack 100 includes a support 10, a pipeline assembly 20, and a feeding apparatus 30.

The support 10 is configured to bear the battery 200 and also to provide a fixed foundation for the pipeline assembly 20 and the feeding apparatus 30. The support 10 is provided with a plurality of storage chambers 11, the storage chamber 11 is configured to store the battery 200, each storage chamber 11 can be configured to store only one battery 200, or each storage chamber 11 can also be configured to store a plurality of batteries 200.

The pipeline assembly 20 extends into at least a part of the storage chambers 11 and is in communication with the storage chambers 11. That is, the pipeline assembly 20 may extend into only a part of the storage chambers 11 or may extend into all of the storage chambers 11 respectively. For example, the pipeline assembly 20 may include a plurality of pipe ports, and each pipe port extends into one storage chamber 11, to enable communication between the pipeline assembly 20 and all the storage chambers 11. Of course, the pipeline assembly 20 can also be in communication with a part of the storage chambers 11 through the plurality of pipe ports.

The feeding apparatus 30 is in communication with the pipeline assembly 20, that is, the pipeline assembly 20 at least includes one pipe port being in communication with the feeding apparatus 30; depending on the usage requirements of the charging rack 100, the feeding apparatus 30 can deliver a drying agent to the pipeline assembly 20, and the feeding apparatus 30 can also deliver a fire extinguishing agent to the pipeline assembly 20, that is, the feeding apparatus 30 can deliver the drying agent or the fire extinguishing agent to the pipeline assembly 20.

After the battery 200 is placed in the storage chamber 11, the feeding apparatus 30 can deliver the drying agent into the storage chamber 11 through the pipeline assembly 20 to reduce the humidity of the battery 200 in the corresponding storage chamber 11. When the battery 200 experiences thermal runaway or catch fire, the feeding apparatus 30 can also deliver the fire extinguishing agent into the corresponding storage chamber 11 through the pipeline assembly 20 to control the fire and extinguish it.

In this embodiment, the support 10 can be a single-layer support 10, in which case the storage chambers 11 are arranged horizontally in sequence. The support 10 can also be a multi-layer support 10, and a plurality of storage chambers 11 are arranged in each layer. It can be understood that the specific arrangement manner of the support 10 and the storage chambers 11 may be determined according to the space, specifications of the battery 200, and other requirements. The material of the support 10 may be metal, plastic, or other materials. The support 10 may be of an open frame structure or a closable cabinet structure with a cabinet door. The support 10 may also be of other structures. According to the structure of the support 10, the storage chamber 11 may be open and is always in communication with the outside world. The storage chamber 11 may also be of a closable structure with a cabinet door.

Because the pipeline assembly 20 needs to receive the drying agent or the fire extinguishing agent delivered by the feeding apparatus 30, and the pipeline assembly 20 also needs to deliver the drying agent or the fire extinguishing agent to each storage chamber 11, the pipeline assembly 20 includes at least one input end and an output end. The input end is in communication with the feeding apparatus 30, while the output end is an end of the pipeline assembly 20 extending into the storage chamber 11.

The pipeline assembly 20 may include a plurality of delivery pipes, one end of each delivery pipe is in communication with the feeding apparatus 30, and the other end extends into different storage chambers 11. The pipeline assembly 20 may also include a main delivery pipe and a plurality of sub-delivery pipes. In this case, one end of the main delivery pipe is in communication with the feeding apparatus 30, and the other end or a plurality of ends are in communication with the plurality of sub-delivery pipes, and the plurality of sub-delivery pipes extend into different storage chambers 11 respectively. It can be understood that the pipeline assembly 20 may also be set into other different structures.

The pipeline in the pipeline assembly 20 may be a rigid pipeline, or a flexible pipeline, or other pipelines; the material of the pipeline in the pipeline assembly 20 may be metal, plastic, or other materials; the cross-sectional shape of the pipeline in the pipeline assembly 20 may be circular, square, or in other shapes.

The output end of the pipeline assembly 20 may be in communication with only the storage chamber 11, in which case the drying agent or the fire extinguishing agent can enter the storage chamber 11 from the pipeline assembly 20; the output end of the pipeline assembly 20 may also face the battery 200 after the battery 200 is placed in the storage chamber 11, so as to deliver the drying agent or the fire extinguishing agent into the battery 200 or to the side of the battery 200, thereby directly acting on the battery 200 for drying or fire extinguishing, which further improves the efficiency of drying and fire extinguishing.

The feeding apparatus 30 may also include a drying agent storage tank, a fire extinguishing agent storage tank, and a delivery device. That is, the delivery device can obtain the drying agent from the drying agent storage tank and also obtain the fire extinguishing agent from the fire extinguishing agent storage tank. In this case, the feeding apparatus 30 can deliver the drying agent in the drying agent storage tank to the pipeline assembly 20 through the delivery device, and the feeding apparatus 30 can also deliver the fire extinguishing agent in the fire extinguishing agent storage tank to the pipeline assembly through the delivery device. In some other embodiments, an execution assembly may also include a drying system and a fire extinguishing system independent of each other. When drying of the battery 200 is required, the drying system is activated and delivers the drying agent to the pipeline assembly 20. When fire extinguishing of the battery 200 is required, the fire extinguishing system is activated and delivers the fire extinguishing agent to the pipeline assembly 20. It can be understood that, the feeding apparatus 30 may also achieve the effect of delivering the drying agent or the fire extinguishing agent to the pipeline assembly 20 in other forms.

The feeding apparatus 30 may deliver the drying agent or the fire extinguishing agent manually, or the feeding apparatus 30 may also be controlled by a control unit and deliver the drying agent or the fire extinguishing agent according to the preset control logic in the control unit.

The feeding apparatus 30 may be arranged on the support 10, or on the ground or a table top on one side of the support 10. The feeding apparatus 30 may also be placed on a separately arranged supporting component.

It can be understood that, in addition to supplying the drying agent and the fire extinguishing agent to the pipeline assembly 20, the feeding apparatus 30 may also supply a refrigerant, a heating agent or other materials to the pipeline assembly 20 as needed.

In this embodiment, the drying agent may be a gas, the drying agent may also be a solid such as a powdered drying agent, or the drying agent may also be in other states; in this embodiment, the fire extinguishing agent may be a gas, the fire extinguishing agent may also be a liquid such as water, the fire extinguishing agent may also be a solid such as sandy soil, or the fire extinguishing agent may also be in other states.

In the charging rack 100 provided in this embodiment, one end of the pipeline assembly 20 is in communication with the feeding apparatus 30, and the other end extends into each storage chamber 11. The feeding apparatus 30 can deliver the drying agent and the fire extinguishing agent to the pipeline assembly 20, so that the charging rack 100 has both the capability of drying the batteries 200 and the capability of fire extinguishing. In addition, a drying or fire extinguishing operation can be performed on a single battery 200 in a targeted manner, thereby reducing the impact of the drying or fire extinguishing operation on some batteries 200 on other batteries 200 in the charging rack 100, and improving the efficiency of drying or fire extinguishing.

In some embodiments, each storage chamber 11 is configured to store only one battery 200.

Referring to FIG. 1, in some embodiments, the charging rack 100 further includes a socket 40 arranged in the storage chamber 11, the socket 40 can be connected to the battery 200 by insertion; an end of the pipeline assembly 20 extending into the storage chamber 11 is connected to the socket 40 in the corresponding storage chamber 11, that is, an output end of the pipeline assembly 20 is connected to the socket 40, so that the drying agent or the fire extinguishing agent can directly enter the battery 200 from the pipeline assembly 20 through the socket 40.

In some embodiments, the socket 40 may be a charging socket for charging the battery 200, in which case the output end of the pipeline assembly 20 can deliver the drying agent or the fire extinguishing agent into the battery 200 while the battery 200 is being charged.

In some other embodiments, the socket 40 may also be a separately arranged dedicated socket that can deliver the drying agent or the fire extinguishing agent to the battery 200 according to the action of the feeding apparatus 30.

In some embodiments, the battery 200 is provided with a feed hole 51 that can dock with the pipeline assembly 20. The feed hole 51 is also in communication with the inside of the battery 200 so that the drying agent or the fire extinguishing agent discharged from the pipeline assembly 20 can directly enter the battery 200 through the feed hole 51.

In some other embodiments, the battery 200 is not provided with a feed hole 51 that docks with the delivery channel 41, but the output end of the pipeline assembly 20 faces the battery 200. That is, the drying agent or the fire extinguishing agent discharged from the pipeline assembly 20 at the moment does not enter the battery 200, but is discharged to the vicinity of the battery 200. Since when the socket 40 is connected to the battery 200 by insertion, the output end of the pipeline assembly 20 is also located beside the battery 200 and close to the battery 200, compared to operating on the space of the entire support 10 or the entire storage chamber 11, delivering the drying agent or the fire extinguishing agent to the vicinity of the battery 200 can also improve the efficiency of drying and fire extinguishing.

In this embodiment, one end of the pipeline assembly 20 is arranged on the socket 40 in the storage chamber 11. When the socket 40 is connected to the battery 200 by insertion, the drying agent or the fire extinguishing agent can be directly introduced into the battery 200, thereby enabling the drying agent or the fire extinguishing agent to directly act on the battery 200 for drying or fire extinguishing, reducing the escape of the drying agent or the fire extinguishing agent and improving the efficiency of drying or fire extinguishing.

In some embodiments, the pipeline assembly 20 includes a pipe member mounted on the support 10; and/or the pipeline assembly 20 includes a channel formed in the support 10.

In some embodiments, the pipeline assembly 20 includes only a pipe member mounted on the support 10. Mounted on the support 10 means that the pipe member is connected to the support 10 by structural components such as clips and pipe clamps. The pipe member is arranged on the support 10, which facilitates arrangement of the pipeline assembly 20 and also reduces damage to the support 10.

In some other embodiments, the pipeline assembly 20 includes only a channel formed in the support 10. "Formed in the support 10" means arranged in the frame structure of the support 10, such as a long slot formed in the side wall of the support 10 or a pipe member embedded in the side wall of the support 10. Forming the pipeline assembly 20 in the support 10 can reduce the space occupied by the pipeline assembly 20, while the support 10 can also protect the pipeline assembly 20.

In some other embodiments, the pipeline assembly 20 includes a pipe member mounted on the support 10, and also includes a channel formed in the support 10.

This embodiment provides various structures for the pipeline assembly 20. The specific structure of the pipeline assembly 20 can be determined according to the working environment to reduce costs and the occupied space, thereby improving the safety performance and service life.

Referring to FIG. 1, in some embodiments, the pipeline assembly 20 includes a main pipeline 21 and a plurality of branch pipelines 22 connected to the main pipeline 21. The main pipeline 21 is in communication with the feeding apparatus 30. One end of the branch pipeline 22 is in communication with the main pipeline 21 and the other end extends into the storage chamber 11. The feeding apparatus 30 can output the drying agent or the fire extinguishing agent to the main pipeline 21, and the drying agent or the fire extinguishing agent in the main pipeline 21 can be output to the corresponding storage chamber 11 through the branch pipeline 22.

There may be only one main pipeline 21, or there may be two or more main pipelines 21; the number of the branch pipelines 22 may be the same as the number of the storage chambers 11, and each branch pipeline 22 corresponds to one storage chamber 11. In this case, each branch pipeline 22 is connected to one socket 40. The number of the branch pipelines 22 may also be less than the number of the storage chambers 11. In this case, one branch pipeline 22 may extend into the plurality of storage chambers 11 and is in communication with the plurality of sockets 40.

The main pipeline 21 and the branch pipeline 22 may be pipe members independent of each other or may be the channel formed in the support 10; the main pipeline 21 and the branch pipeline 22 may be rigid pipelines, or flexible pipelines, or other pipelines; the material of the pipeline in the pipeline assembly 20 may be metal, plastic, or other materials; the cross-sectional shape of the pipeline in the pipeline assembly 20 may be circular, square, or in other shapes.

In some embodiments, a switching device, such as a manual valve or a solenoid valve, may be arranged on the branch pipeline 22. The switching device may be arranged at any position on the branch pipeline 22, such as at a joint of the branch pipeline 22 and the main pipeline 21, or at the part of the branch pipeline 22 located in the storage chamber 11. The switching device corresponds to the storage chamber 11, and the switching device may be in a normally closed state. When it is necessary to deliver the drying agent or the fire extinguishing agent into a certain storage chamber 11, turning on the switching device corresponding to the storage chamber 11 can allow the drying agent or the fire extinguishing agent to be discharged through the main pipeline 21 and the branch pipeline 22 to the vicinity of the battery 200 or to the inside of the battery 200.

In some other embodiments, the communication between the branch pipeline 22 and the storage chamber 11 can also be achieved through the socket 40. For example, a pressable structure is arranged on the socket 40. After the socket 40 is connected to the battery 200 by insertion, the pressable structure is pushed open and the branch pipeline 22 is opened. It can be understood that the control over the communication state of the branch pipeline 22 can also be achieved through other structures or devices.

In this embodiment, the pipeline assembly 20 includes the main pipeline 21 and the plurality of branch pipelines 22. The feeding apparatus 30 can deliver the drying agent or the fire extinguishing agent to each branch pipeline 22 through the main pipeline 21 without having to arrange a separate pipeline for each storage chamber 11. This simplifies the pipeline assembly 20, reduces the space occupied by the pipeline assembly 20, and also facilitates the feeding apparatus 30 to deliver the drying agent or the fire extinguishing agent.

In some embodiments, the main pipeline 21 may be arranged on the support 10, and/or the feeding apparatus 30 is arranged on the support 10.

The feeding apparatus 30 may be directly connected to the support 10 or arranged beside the separate support 10; the main pipeline 21 may be arranged on the support 10 along with the feeding apparatus 30, depending on the position of the feeding apparatus 30.

Referring to FIG. 1, in some embodiments, the pipeline assembly 20 further includes terminal pipelines 23 connected to the branch pipelines 22, and an end of the terminal pipeline 23 deviating from the branch pipeline 22 is connected to the socket 40, that is, one end of the terminal pipeline 23 is connected to the branch pipeline 22, and the other end of the terminal pipeline 23 is connected to the socket 40.

The number of the terminal pipelines 23 is the same as the number of the storage chambers 11, while the number of branch pipelines 22 can be less than the number of the storage chambers 11. Specifically, in some embodiments, the support 10 has a plurality of layers arranged in a height direction, and each layer is provided with a plurality of storage chambers 11. In this case, the number of the branch pipelines 22 is the same as the number of the layers of the support 10. Each branch pipeline 22 passes through the storage chambers 11 of the corresponding layer, and the terminal pipeline 23 is arranged in each storage chamber 11.

In some other embodiments, the support 10 is provided with a plurality of columns arranged in a length direction, and each column is provided with a plurality of storage chambers 11. In this case, the number of the branch pipelines 22 is the same as the number of the columns of the support 10, each branch pipeline 22 passes through the storage chambers 11 of the corresponding column, and the terminal pipeline 23 is arranged in each storage chamber 11. It can be understood that other extension manners of the branch pipelines 22 may also be set according to the arrangement manner of the storage chambers 11 on the support 10.

Referring to FIG. 1, the height direction of the support 10 is the direction of a Y-axis in the figure, and the length direction of the support 10 is the direction of an X-axis in the figure.

The terminal pipeline 23 may be a rigid pipeline, or a flexible pipeline, or other pipelines; the material of the pipeline in the pipeline assembly 20 may be metal, plastic, or other materials; the cross-sectional shape of the pipeline in the pipeline assembly 20 may be circular, square, or in other shapes.

In this embodiment, the terminal pipeline 23 directly connected to the socket 40 is arranged, so that the drying agent or the fire extinguishing agent can be directly input into the battery 200 after the socket 40 is connected to the battery 200 by insertion, which facilitates an efficient drying or fire extinguishing operation on the battery 200. Meanwhile, arranging the terminal pipeline 23 further simplifies the pipeline assembly 20, which reduces the space occupied by the pipeline assembly 20, and more facilitates the arrangement of the pipeline assembly 20.

Referring to FIG. 1, in some embodiments, the socket 40 is movably connected into the storage chamber 11, and the socket 40 can move in a direction close to or far away from the battery 200. When the socket 40 moves in the direction close to the battery, the socket 40 can be connected to the battery 200 by insertion, and when the socket 40 moves in the direction far away from the battery 200, the socket 40 can be pulled out of the battery 200.

In this embodiment, that the socket 40 is movable means that the socket 40 can move relative to the support 10 and relative to the battery 200 in the storage chamber 11, and move closer to or further away from the battery 200.

It can be understood that, since the socket 40 is movable, the terminal pipeline 23 also needs to move synchronously with the socket 40. Therefore, the terminal pipeline 23 can be a rigid pipeline that is telescopic or deformable, or the terminal pipeline 23 can be a flexible pipeline.

Because the battery 200 is heavy and inconvenient to move, while the socket 40 is lightweight, in the technical solution of this embodiment, the socket 40 is set as a movable structure, so that the socket 40 can move in the direction close to the battery 200 to connect the socket 40 to the battery 200 by insertion, thereby reducing the secondary movement of the battery 200 in the storage chamber 11 and reducing the insertion difficulty.

In some embodiments, a lifting assembly is arranged in the storage chamber 11, and the socket 40 is arranged on the lifting assembly.

The lifting assembly is configured to drive the socket 40 to move closer to or further away from the battery 200. The lifting assembly may be a cylinder, a hydraulic cylinder, an electric telescopic structure or other devices or assemblies.

The lifting assembly is arranged, so that the socket 40 is enabled to move close to the battery 200 and is connected to the plug 50 of the battery 200 by insertion; at the same time, the lifting assembly can also detach the socket 40 from the plug 50 of the battery 200, so that the drying agent or the fire extinguishing agent can enter the battery 200 or be discharged to the vicinity of the battery 200.

Referring to FIG. 2, in some embodiments, the socket 40 can move in a direction of the Y-axis in the figure to move closer to or further away from the battery 200.

Referring to FIG. 2, in some embodiments, the socket 40 is provided with a delivery channel 41 for delivering the drying agent or the fire extinguishing agent. The delivery channel 41 is in communication with the pipeline assembly 20. The drying agent or the fire extinguishing agent discharged from the pipeline assembly 20 can enter the battery 200 through the delivery channel 41. Specifically, the delivery channel 41 can be in communication with the terminal pipeline 23 of the pipeline assembly 20, so that the drying agent or the fire extinguishing agent discharged from the feeding apparatus 30 can enter the delivery channel 41 after passing through the main pipeline 21, the branch pipeline 22, and the terminal pipeline 23, and then enter the battery 200 through the delivery channel 41.

The delivery channel 41 may be a through hole, a through groove or other structures formed in the socket 40, or may be an independent pipe member arranged on the socket 40; the cross-sectional shape of the delivery channel 41 may be circular, square or in other shapes.

In some embodiments, a feed hole 51 that can dock with the delivery channel 41 may be formed in the battery 200.

When the battery 200 is provided with the feed hole 51 that can dock with the pipeline assembly 20, a switching device may be arranged in the delivery channel 41, and the switching device is used to close the delivery channel 41. When the socket 40 is connected to the battery 200 by insertion, the feed hole 51 can turn on the switching device in the delivery channel 41 and make the delivery channel 41 be in communication with the feed hole 51, so that the drying agent or the fire extinguishing agent can enter the battery 200 through the delivery channel 41 and the feed hole 51.

In some other embodiments, the battery 200 is not provided with a feed hole 51 for docking with the delivery channel 41, but the delivery channel 41 faces the battery 200. When the socket 40 is connected to the battery 200 by insertion, the delivery channel 41 is also located beside the battery 200 and relatively close thereto. Therefore, compared with performing the drying or fire extinguishing operation on the space of the entire support 10 or the entire storage chamber 11, delivering the drying agent or the fire extinguishing agent to the vicinity of the battery 200 can also improve the efficiency of drying and fire extinguishing.

In this embodiment, an air passage being in communication with the pipeline assembly 20 is arranged on the socket 40, so that the pipeline assembly 20 can directly introduce the drying agent or the fire extinguishing agent into the battery 200 through the air passage, thereby achieving the efficient drying or fire extinguishing operation on the battery 200.

Referring to FIG. 2, in some embodiments, the socket 40 is provided with a high-voltage connector 47 and a low-voltage connector 46, and the high-voltage connector 47, the low-voltage connector 46, and the delivery channel 41 are arranged on a same side of the socket 40.

The socket 40 is provided with the high-voltage connector 47 and the low-voltage connector 46, that is, the socket 40 is a charging socket capable of charging the battery 200. The socket 40 can be connected to the plug 50 of the battery 200 by insertion. When the socket 40 is connected to the plug 50 by insertion, both the high-voltage connector 47 and the low-voltage connector 46 can be connected to the battery 200, so that the battery 200 can be charged by the socket 40 and information of the battery 200 can be acquired.

The high-voltage connector 47 can be configured to charge the battery 200. The high-voltage connector 47 may be a pin, a jack socket, or other plug-in structures. The low-voltage connector 46 may be configured to have communication connection with the battery 200. The low-voltage connector 46 may be a pin, a jack socket, or other plug-in structures.

In the charging rack 100 provided by this embodiment, the high-voltage connector 47, the low-voltage connector 46, and the delivery channel 41 are all integrated in the socket 40, which enables the socket 40 to simultaneously have charging, discharging, drying, and fire extinguishing functions, thereby increasing the functions of the socket 40 and simplifying the structure of the charging rack 100 at the same time.

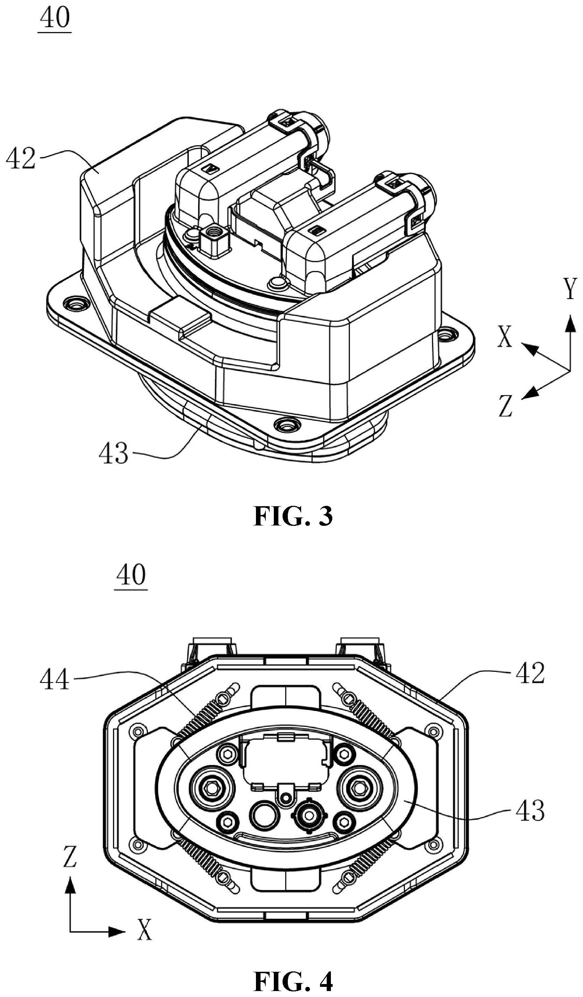

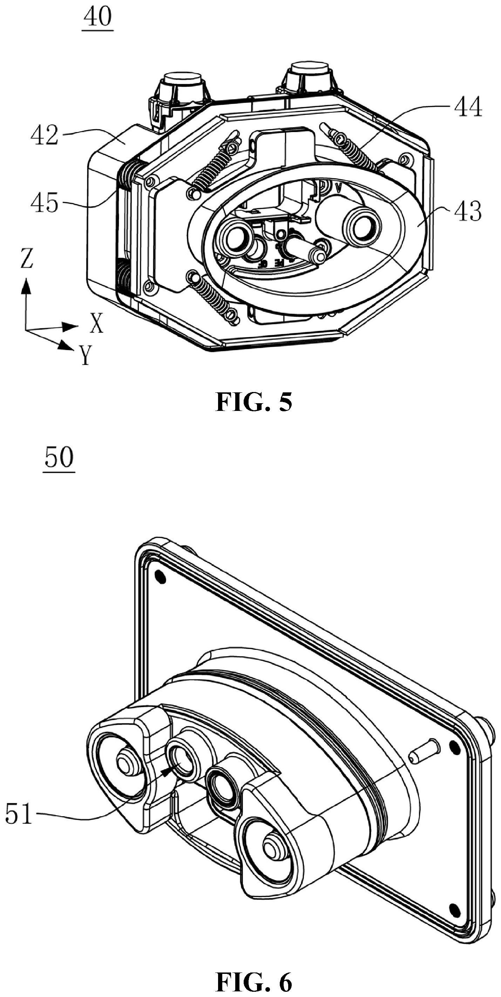

Referring to FIG. 3 and FIG. 5, in some embodiments, the socket 40 includes a housing 42 and a guide member 43 arranged in the housing 42, and the guide member 43 is configured to guide the plug 50 on the battery 200 to be inserted into the socket 40.

The housing 42 is a housing 42 of the socket 40. The housing 42 is configured to provide a fixed foundation for the guide member 43, the delivery channel 41, and the terminal pipeline 23. The lifting assembly in the storage chamber 11 can also be connected to the housing 42, so that the lifting assembly can drive the socket 40 to move. The material of the housing 42 may be metal, plastic or other materials. The shape of the housing 42 may be cylindrical, cubic or in other shapes.

Because there may be a slight error between the plug 50 of the battery 200 and the socket 40 after the battery 200 is placed in an accommodating chamber, making it impossible for the socket 40 to be accurately connected to the plug 50 by insertion, so the guide member 43 is needed to correct the position of the socket 40 during the process of connecting the socket 40 to the plug 50 by insertion.

The guide member 43 may be a guide hole, in which case the plug 50 is provided with a guide pin matched with the guide hole. The guide member 43 may also be a guide ramp or other guide structures.

As the socket 40 approaches and is connected to the plug 50 by insertion, the guide member 43 first contacts the plug 50. As the socket 40 gradually approaches the plug 50, the plug 50 abuts against the guide member 43 and the socket 40 is gradually aligned with the plug 50 to correct the position of the socket 40 and enable the socket 40 to be connected to the plug 50 by insertion.

It can be understood that, because the socket 40 may move in various directions relative to the battery 200 under the action of the guide member 43 to correct the position of the socket 40, the socket 40 should be able to float relative to the lifting assembly. The floating of the socket 40 relative to the lifting assembly means that the socket 40 can have a movement space in a plurality of directions relative to the lifting assembly.

In some embodiments, referring to FIG. 1, the socket 40 can approach the battery 200 in the height direction of the charging rack 100 and be connected to the battery 200 by insertion. During the process of connecting the socket 40 by insertion, the displacement of the socket 40 for correcting the position occurs in the horizontal plane. Therefore, the floating of the socket 40 relative to the lifting assembly includes at least the floating in the horizontal plane.

In this embodiment, the guide member 43 is arranged on the socket 40, so that the guide member 43 provides a guiding function for the socket 40 during the process of connecting the socket 40 to the battery 200 by insertion, thereby enabling the socket 40 to be accurately connected to the battery 200 by insertion.

Referring to FIG. 3 and FIG. 5, in some embodiments, the guide member 43 is in a flared shape, and a larger inner diameter end faces outward.

The guide member 43 is shaped like a flared mouth, which is of a thin-walled structure with a large inner diameter at one end and a small inner diameter at the other end. The specific shape of the guide member 43 may be pyramidal, conical, or in other shapes. The material of the guide member 43 may be metal, plastic, or other materials.

In this embodiment, the guide member 43 is arranged on the socket 40, so that the guide member 43 can correct the positional error of the socket 40 in various directions, thereby ensuring that the socket 40 can be accurately connected to the battery 200 by insertion.

Referring to FIG. 3 and FIG. 5, in some embodiments, the guide member 43 is movably arranged in the housing 42.

The guide member 43 is movable relative to the housing 42. This arrangement allows the plug 50 to abut against the guide member 43 when the socket 40 is connected to the plug 50 by insertion, so that the guide member 43 can move and be aligned with the plug 50, thereby facilitating the socket 40 to be accurately connected to the plug 50 by insertion.

In some embodiments, that the guide member 43 is movable relative to the housing 42 can be achieved by a spring structure, for example, by arranging a spring between the guide member 43 and the housing 42, the guide member 43 can move relative to the housing 42 and can be reset.

In some other embodiments, that the guide member 43 is movable relative to the housing 42 can also be achieved by arranging rubber or a sponge or other structures around the guide member 43.

That the guide member 43 is movable relative to the housing 42 allows the guide member 43 to move first relative to the housing 42 when the socket 40 is connected to the plug 50 by insertion. Since the weight of the guide member 43 is less than the weight of the entire socket 40, this arrangement can prevent the plug 50 against damage caused by collision.

Referring to FIG. 3 and FIG. 5, in some embodiments, the socket 40 further includes a plurality of first elastic members 44; one end of the first elastic member 44 is connected to the housing 42, and the other end is connected to the guide member 43; and a deformation direction of the first elastic member 44 is perpendicular to a movement direction of the socket 40.

By arranging the first elastic member 44, the guide member 43 can move relative to the housing 42, so that the guide member 43 can be displaced during the process of connecting the socket 40 to the battery 200 by insertion, so as to realize the correction of the socket 40 relative to the plug 50 of the battery 200, thereby enabling the socket 40 to be accurately connected to the battery 200 by insertion.

One end of the first elastic member 44 is connected to the inner wall of the housing 42 and the other end is connected to the guide member 43. The plurality of first elastic members 44 can be arranged on the peripheral side of the guide member 43 and extend in different directions, so that the plurality of first elastic members 44 can apply an external force to the guide member 43 in different directions. In the natural state, the resultant force of forces exerted by the plurality of first elastic members 44 on the guide member 43 is 0, thereby fixing the relative position of the guide member 43 and the housing 42. In this case, the position of the guide member 43 relative to the housing 42 is the initial position of the guide member 43. When affected by the external force, the guide member 43 will be displaced and then dock with the battery 200. When the docking with the battery 200 is disengaged, the restoring force of each first elastic member 44 can make the guide member 43 move relative to the housing 42 and make the guide member 43 return to the initial position inside the housing 42.

The extension directions of the plurality of first elastic members 44 can converge at the center of the guide member 43, that is, the plurality of first elastic members 44 all extend towards the center of the guide member 43; it can be understood that, under the premise that the plurality of first elastic members 44 can keep the guide member 43 stationary relative to the housing 42, the extension directions of the plurality of first elastic members 44 may not pass through the center of the guide member 43 and extend in different directions.

The first elastic member 44 may be a spring, a rubber component, or other elastic components.

The number of the first elastic members 44 may be two or more, so that the guide member 43 can remain stationary relative to the housing 42 under the action of the plurality of first elastic members 44.

The plurality of first elastic members 44 may have the same specifications such as a stiffness coefficient and size. In this case, the plurality of first elastic members 44 may be uniformly arranged on the peripheral side of the guide member 43, or symmetrically arranged in pairs about the center of the guide member 43. It can be understood that, on the premise that the plurality of first elastic members 44 can keep the guide member 43 stationary relative to the housing 42, the plurality of first elastic members 44 may also have different specifications, and the plurality of first elastic members 44 may be arranged in different manners.

The deformation direction of the first elastic member 44 is perpendicular to the movement direction of the socket 40, so that the movement direction of the guide member 43 can be perpendicular to the movement direction of the socket 40, and then the guide member 43 can be better aligned with the plug 50 during the process of connecting the socket 40 to the plug 50 by insertion.

Referring to FIG. 3, in some embodiments, the deformation directions of the plurality of first elastic members 44 are on a same plane.

Specifically, the movement direction of the socket 40 may be the direction of the Y-axis. Then the deformation direction of the first elastic member 44 is in the plane where the X-axis and the Z-axis are located, so that the deformation direction of the first elastic member 44 is perpendicular to the movement direction of the socket 40. The deformation direction of the first elastic member 44 also affects the movement direction of the guide member 43. This setting allows the guide member 43 to be better aligned with the plug 50 during the process of connecting the socket 40 to the plug 50 by insertion.

In some embodiments, the guide member 43 may be located at the center of the housing 42, and in this case, the guide member 43 faces the delivery channel 41, the high-voltage connector 47, and the low-voltage connector 46 of the socket 40, so that the plug 50 of the battery 200 can be connected to the delivery channel 41, the high-voltage connector 47, and the low-voltage connector 46; in some other embodiments, the delivery channel 41, the high-voltage connector 47, and the low-voltage connector 46 of the socket 40 are all housed in the guide member 43.

The socket 40 can move in the direction close to the battery 200 to be connected to the battery 200 by insertion. During the process of connecting the socket 40 to the battery 200 by insertion, if the socket 40 and the plug 50 of the battery 200 are not aligned, the plug 50 will first contact the guide member 43. As the plug 50 continuously moves, the guide member 43 will move under the external force of the plug 50 and eventually alignment with the plug 50 is achieved, in this case, the housing 42 is displaced under the restoring force of the first elastic member 44, so that the guide member 43 returns to the initial position and the plug 50 can be connected to the delivery channel 41, the high-voltage connector 47, and the low-voltage connector 46.

It can be understood that, the displacement of the guide member 43 relative to the socket 40 should be within the same plane, and the plane is perpendicular to the movement direction of the socket 40. Since the positional error between the battery 200 and the socket 40 may be in any direction within the plane, the guide member 43 can move relative to the socket 40 in any direction within the plane.

Referring to FIG. 3 and FIG. 5, the plane in which the guide member 43 moves is the plane where the X-axis and the Z-axis in the figure are located, and the direction of the Y-axis is the direction in which the socket 40 moves.

To avoid secondary movement of the battery 200 in the storage chamber 11, in this embodiment, the guide member 43 is arranged as a movable floating structure, and the first elastic member 44 is used to position the guide member 43. During the process of connecting the socket 40 to the battery 200 by insertion, if there is a positional offset between the socket 40 and the plug 50 of the battery 200, the guide member 43 can be aligned with the plug 50 under the action of the plug 50 and deform the first elastic member 44. As the socket 40 continues moving for insertion, the force for the first elastic member 44 to reset can make the socket 40 and the plug 50 face each other, thereby finally completing insertion.

Referring to FIG. 4 and FIG. 5, in some embodiments, the socket 40 further includes a second elastic member 45; one end of the second elastic member 45 is connected to the guide member 43, and the other end is connected to the housing 42; the second elastic member 45 is configured to press the guide member 43 against the housing 42.

The deformation directions of the plurality of first elastic members 44 are on the same plane, and the deformation direction of the second elastic member 45 is not parallel to the plane in which the deformation direction of the first elastic member 44 is located.

Optionally, an extension direction of the second elastic member 45 is perpendicular to the plane in which the extension direction of the first elastic member 44 is located.

The second elastic member 45 can press the guide member 43 against the housing 42, thereby keeping the guide member 43 stationary relative to the housing 42, so as to further fix the position of the guide member 43, so that when the socket 40 is idle, the guide member 43 can be stationary relative to the housing 42 without frequent shaking.

The deformation directions of the plurality of first elastic members 44 are on the same plane, and the plane is the plane where the displacement direction of the guide member 43 is located. The deformation direction of the second elastic member 45 is at an angle relative to this plane, so that the second elastic member 45 can better press the guide member 43 against the housing 42. During the process of connecting the socket 40 to the battery 200 by insertion, when making contact with the guide member 43, the plug 50 also applies a force perpendicular to the plane where the deformation direction of the first elastic member 44 is located to the guide member 43, in which case the second elastic member 45 is stressed and compressed, thereby reducing the possible collision damage between the guide member 43 and the plug 50 of the battery 200.

Referring to FIG. 4 and FIG. 5, the plane in which the deformation directions of the plurality of first elastic members 44 are located is the plane where the X-axis and Z-axis in the figures are located, and the deformation direction of the second elastic member 45 is the direction of the Y-axis in FIG. 5.

In some embodiments, the housing 42 includes an edge plate 421. The second elastic member 45 is able to press the guide member 43 against the housing 42, meaning that the second elastic member 45 is able to press the guide member 43 against the edge plate 421. Specifically, the guide member 43 is arranged on the side of the edge plate 421 facing the interior of the housing 42. The edge plate 421 is parallel to the plane in which the deformation direction the first elastic member 44 is located. The second elastic member 45 is arranged on the side of the guide member 43 deviating from the edge plate 421. The second elastic member 45 is able to press the guide member 43 against the edge plate 421. When the socket 40 is connected to the plug 50 of the battery 200 by insertion, the plug 50 can pass through the edge plate 421 and be connected to the delivery channel 41, the high-voltage connector 47, and the low-voltage connector 46 of the socket 40.

In some other embodiments, the housing 42 may also be provided with other structures such as ribs and wing plates to assist the second elastic member 45 in fixing the guide member 43.

In this embodiment, the guide member 43 is pressed against the housing 42 by arranging the second elastic member 45 to fix the position of the guide member 43, so as to avoid that the position of the guide member 43 is not determined when the socket 40 is idle; meanwhile, collision damage between the plug 50 of the battery 200 and the guide member 43 can also be reduced.

Referring to FIG. 1, in some embodiments, the feeding apparatus 30 includes a drying assembly 31 and a fire extinguishing assembly 32, the drying assembly 31 is in communication with the pipeline assembly 20, and the drying assembly 31 is configured to input the drying agent to the pipeline assembly 20; the fire extinguishing assembly 32 is in communication with the pipeline assembly 20, and the fire extinguishing assembly 32 is configured to input the fire extinguishing agent to the pipeline assembly 20.

The drying assembly 31 may include a drying agent delivery apparatus and a drying agent storage apparatus. The drying agent storage apparatus is configured to store the drying agent, and the drying agent storage apparatus may be a storage box, a storage tank, a storage pool, or other apparatuses. The drying agent delivery apparatus is configured to deliver the drying agent in the drying agent storage apparatus to the pipeline assembly 20. Depending on the type of the drying agent, the drying agent delivery apparatus may be an air pump, a hydraulic pump, or other delivery apparatuses. The drying assembly 31 may also include other apparatuses, such as a drying agent air-drying apparatus and a control apparatus.

The fire extinguishing assembly 32 may include a fire extinguishing agent delivery apparatus and a fire extinguishing agent storage apparatus. The fire extinguishing agent storage apparatus is configured to store the fire extinguishing agent, and the fire extinguishing agent storage apparatus may be a storage box, a storage tank, a storage pool, or other apparatuses. The fire extinguishing agent delivery apparatus is configured to deliver the fire extinguishing agent in the fire extinguishing agent storage apparatus to the pipeline assembly 20. Depending on the type of the fire extinguishing agent, the fire extinguishing agent delivery apparatus may be an air pump, a hydraulic pump, or other delivery apparatuses. The fire extinguishing assembly 32 may also include other apparatuses, such as a fire extinguishing agent pressurizing apparatus and a control apparatus.

In this embodiment, the feeding apparatus 30 includes the drying assembly 31 and the fire extinguishing assembly 32 independent of each other, so as to facilitate the introduction of the drying agent or the fire extinguishing agent into the battery 200 under different working conditions, and to facilitate the independent control over the drying assembly 31 and fire extinguishing assembly 32.

In some embodiments, the drying agent and/or the fire extinguishing agent are/is a gas.

In this embodiment, setting the drying agent and/or the fire extinguishing agent as a gas can reduce the impact of the drying agent or the fire extinguishing agent on the internal structure of the battery 200. At the same time, the gaseous drying agent or fire extinguishing agent can also reduce the impact of the residual drying agent or fire extinguishing agent in the pipeline assembly 20 on the next delivery. The gaseous drying agent and fire extinguishing agent also facilitate delivery by the feeding apparatus 30.

In some embodiments, the fire extinguishing agent includes any one of carbon dioxide, heptafluoropropane, argon, nitrogen, and IG-541 (Inergen).

Carbon dioxide itself does not burn or support combustion, is easy to produce and liquefy, convenient for canning and storage, and is colorless and odorless, so it can be used as an excellent fire extinguishing agent. Meanwhile, carbon dioxide can be pressurized to form solid dry ice to achieve a cooling effect.

As a fire extinguishing agent, heptafluoropropane features cleanness, low toxicity, good electrical insulation, high fire extinguishing efficiency, and no damage to the atmospheric ozone layer.

The argon fire extinguishing agent is non-toxic, non-damaging and non-corrosive to protected objects, and resistant to high temperatures, leaving no residue after fire extinguishing. The argon fire extinguishing agent is discharged without rapid cooling or atomization, which will not affect the operation of the battery 200 or the field of vision.

Nitrogen is non-pyrophoric and does not support combustion. It is inert at room temperature and does not react with other substances. It can be used to extinguish fire and will not affect the battery 200.

The IG-541 (Inergen) fire extinguishing agent includes nitrogen, argon, and carbon dioxide, does not undergo a chemical reaction during fire extinguishing, does not pollute the environment, is non-toxic and non-corrosive, and has good electrical insulation properties.

This embodiment provides a variety of fire extinguishing agents to facilitate selection for batteries 200 in different specifications and different charging environments.

The charging rack 100 provided in the embodiment of the first aspect of the present application can control the socket 40 to be connected to the plug 50 of the battery 200 by insertion after the battery 200 is placed in the storage chamber 11. After insertion is completed, the drying assembly 31 of the feeding apparatus 30 is used to output the drying agent. The drying agent can enter the battery 200 through the main pipeline 21, the branch pipeline 22, the terminal pipeline 23, and the delivery channel 41 to alleviate the condensation, water accumulation and other conditions that may occur in the battery 200 in a targeted manner. When the battery 200 experiences thermal runaway or catch fire, the fire extinguishing assembly 32 of the feeding apparatus 30 can output the fire extinguishing agent. The fire extinguishing agent can enter the battery 200 through the main pipeline 21, the branch pipeline 22, the terminal pipeline 23, and the delivery channel 41 to perform fire extinguish on the battery 200 in a targeted manner and reduce the impact of the fire on other batteries 200 and the overall environment.

Referring to FIG. 6, in a second aspect, an embodiment of present application provides a battery 200, applied to the charging rack 100 according to the embodiment of the first aspect. The battery 200 can be placed in a storage chamber 11, and a feeding apparatus 30 can deliver a drying agent or a fire extinguishing agent into or to the vicinity of the battery 200 through the pipeline assembly 20.

In some embodiments, the battery 200 includes a plug 50, and the plug 50 can be inserted into a socket 40, so that the socket 40 can charge the battery 200 through the plug 50.

The plug 50 is provided with a feed hole 51 for delivering the drying agent or the fire extinguishing agent. When the socket 40 is connected to the plug 50 by insertion, the delivery channel 41 of the socket 40 faces and is in communication with the feed hole 51, so that the drying agent or the fire extinguishing agent can enter the battery 200.

In a third aspect, an embodiment of the present application further provides an electrical apparatus, including the battery 200 according to the embodiment of the second aspect.

The electrical apparatus may be, but is not limited to, a mobile phone, a tablet, a laptop, an electric toy, an electric tool, a battery vehicle, an electric vehicle, a ship, a spacecraft, and so on. The electric toy may include a fixed or mobile electric toy, such as a game machine, an electric vehicle toy, an electric ship toy, an electric airplane toy, and the like. The spacecraft may include an airplane, a rocket, a space shuttle, a spaceship, and the like.

In a fourth aspect, an embodiment of the present application provides a battery swapping system, including the charging rack 100 provided in the embodiment of the first aspect, the battery swapping system may be battery swapping stations that store a large number of power batteries, as well as dedicated battery swapping systems for large electrical devices, power battery charging cabinets for small electrical devices, or other battery swapping systems. The large electrical devices can be ships, airplanes, rockets, space shuttles, spacecraft, and other spacecraft, while the small electrical devices can be electric toys, electric tools, battery vehicles, electric-assisted vehicles, etc.

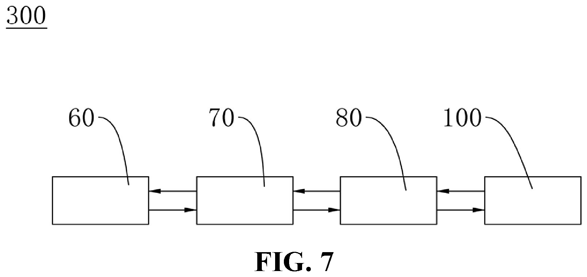

Referring to FIG. 7, in some embodiments, the battery swapping system 300 further includes a transport module 60, a buffer module 70, and a palletizing module 80.

The transport module 60 is configured to transport the battery 200 to the buffer module 70. The transport module 60 may be an automated transport module such as a rail guided vehicle (RGV) or an automated guided vehicle (AGV), or the transport module 60 may be a manual transport module formed by manually controlled transport trolleys, forklifts, or other devices.

The buffer module 70 is configured to receive the battery 200 delivered by the transport module 60, so as to temporarily store the battery 200. The buffer module 70 may be a storage rack, a storage platform or other components, or an intelligent electronic support system with automatic lifting and switching functions.

The palletizing module 80 is configured to transport the battery 200 on the buffer module 70 into the storage chamber 11. The palletizing module 80 may be a manually operated palletizing device, such as a manually operated forklift, or a fully automatic palletizing device, such as an automatic robotic arm or a fully automatic palletizer.

It can be understood that, the palletizing module 80 may also be configured to place the battery 200 in the storage chamber 11 onto the buffer module 70, and the transport module 60 may also be configured to acquire the battery 200 on the buffer module 70 and transport the same to other devices.

In this embodiment, the transport module 60 can acquire the battery 200 to be charged and transport the battery 200 to be charged to the buffer module 70. The buffer module 70 can acquire the battery 200 delivered by the transport module 60. The palletizing module 80 can acquire the battery 200 to be charged from the buffer module 70 and put the battery 200 into the empty storage chamber 11.

In some embodiments, the transport module 60 is an RGV transport system, the buffer module 70 is a buffer support, and the palletizing module 80 is a fully automatic palletizer.

This embodiment enables the battery swapping system to have automatic carrying and automatic charging functions for the battery 200, thereby improving the battery swapping efficiency and reducing the safety hazards and risks of non-standard operation that may be caused by manual operation.

The above embodiments are merely used for describing the technical solutions of the present application, instead of limiting the present application; although the present application is described in detail with reference to the foregoing embodiments, those of ordinary skill in the art should understand that: they can still make modifications on the technical solutions described in the foregoing embodiments, or perform equivalent replacements on a part of technical features thereof; and these modifications or replacements are not intended to make the essences of the corresponding technical solutions depart from the spirit and scope of the technical solutions of the embodiments of the present application, but should all be encompassed within the scope of protection of the present application.

## Claims

1. A charging rack, configured to charge a battery, wherein the charging rack comprises:
a support, wherein the support comprises a plurality of storage chambers;
a pipeline assembly, wherein the pipeline assembly extends into at least a part of the storage chambers and is in communication with the storage chambers; and
a feeding apparatus, being in communication with the pipeline assembly, wherein the feeding apparatus is configured to deliver a drying agent and/or a fire extinguishing agent to the pipeline assembly.

2. The charging rack according to claim 1, wherein the charging rack further comprises a socket arranged in the storage chamber, and the socket is able to be connected to the battery by insertion; and
an end of the pipeline assembly extending into the storage chamber is connected to a socket in the corresponding storage chamber.

3. The charging rack according to claim 2, wherein the pipeline assembly comprises a pipe member mounted on the support; and/or the pipeline assembly comprises a channel formed in the support.

4. The charging rack according to claim 2 or 3, wherein the pipeline assembly comprises a main pipeline and a plurality of branch pipelines connected to the main pipeline; the main pipeline is in communication with the feeding apparatus; and one end of the branch pipeline is in communication with the main pipeline, and the other end extends into the storage chamber.

5. The charging rack according to claim 4, wherein the main pipeline is arranged on the support; and/or the feeding apparatus is arranged on the support.

6. The charging rack according to claim 4 or 5, wherein the pipeline assembly further comprises a terminal pipeline connected to the branch pipeline, and an end of the terminal pipeline deviating from the branch pipeline is connected to the socket.

7. The charging rack according to any one of claims 2-6, wherein the socket is movably connected into the storage chamber, and the socket is able to move in a direction close to or far away from the battery.

8. The charging rack according to claim 7, wherein a lifting assembly is arranged in the storage chamber, and the socket is arranged on the lifting assembly.

9. The charging rack according to claim 7 or 8, wherein the socket is provided with a delivery channel for delivering the drying agent or the fire extinguishing agent, and the delivery channel is in communication with the pipeline assembly.

10. The charging rack according to claim 9, wherein the socket is provided with a high-voltage connector and a low-voltage connector, and the high-voltage connector, the low-voltage connector, and the delivery channel are arranged on a same side of the socket.

11. The charging rack according to any one of claims 7-10, wherein the socket comprises a housing and a guide member arranged in the housing, and the guide member is configured to guide a plug on the battery to be inserted into the socket.

12. The charging rack according to claim 11, wherein the guide member is in a flared shape, and a larger inner diameter end faces outward.

13. The charging rack according to claim 11 or 12, wherein the guide member is movably arranged in the housing.

14. The charging rack according to claim 13, wherein the socket further comprises a plurality of first elastic members; one end of the first elastic member is connected to the housing, and the other end is connected to the guide member; and a deformation direction of the first elastic member is perpendicular to a movement direction of the socket.

15. The charging rack according to claim 14, wherein the deformation directions of the plurality of first elastic members are on a same plane.

16. The charging rack according to claim 15, wherein the socket further comprises a second elastic member; one end of the second elastic member is connected to the guide member, and the other end is connected to the housing; and a deformation direction of the second elastic member is perpendicular to a plane where the deformation direction of the first elastic member is located.

17. The charging rack according to any one of claims 1-16, wherein the feeding apparatus comprises a drying assembly and a fire extinguishing assembly, the drying assembly is in communication with the pipeline assembly, and the drying assembly is configured to input the drying agent to the pipeline assembly; and
the fire extinguishing assembly is in communication with the pipeline assembly, and the fire extinguishing assembly is configured to input the fire extinguishing agent to the pipeline assembly.

18. The charging rack according to any one of claims 1-16, wherein the drying agent and/or the fire extinguishing agent are/is a gas.

19. A battery, applied to the charging rack according to any one of claims 1-18, wherein the battery comprises a plug, and a through hole for delivering the drying agent or the fire extinguishing agent is formed in the plug.

20. An electrical apparatus, comprising the battery according to claim 19.

21. A battery swapping system, comprising the charging rack according to any one of claims 1-18.
